Europäisches Patentamt

European Patent Office

Office européen des brevets

(19)

(11) Publication number: **0 016 591**
**B1**

(12) **EUROPEAN PATENT SPECIFICATION**

(45) Date of publication of patent specification: **25.01.84**

(51) Int. Cl.³: **B 01 D 53/34** //C05B7/00

(21) Application number: **80300707.9**

(22) Date of filing: **07.03.80**

(54) Treatment of effluent gases from the manufacture of fertilizer and products obtained thereby.

<table>
<tr><td>

(30) Priority: **08.03.79 US 18485**

(43) Date of publication of application:
**01.10.80 Bulletin 80/20**

(45) Publication of the grant of the patent:
**25.01.84 Bulletin 84/4**

(84) Designated Contracting States:
**BE DE FR GB IT NL**

(56) References cited:
**DE - A - 2 534 616**
**DE - A - 2 553 028**
**US - A - 3 721 066**
**US - A - 3 808 774**
**US - A - 3 969 482**
**US - A - 3 995 005**

The file contains technical information
submitted after the application was filed and not
included in this specification

</td><td>

(73) Proprietor: **Teller Environmental Systems Inc.**
**10 Faraday Street**
**Worcester Massachusetts 01605 (US)**

(72) Inventor: **Teller, Aaron J., Dr.**
**293 Turnpike Road**
**Westboro Massachusetts 01581 (US)**

(74) Representative: **Woodcraft, David Charles**
**BROOKES & MARTIN High Holborn House 52/54**
**High Holborn**
**London, WC1V 6SE (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Treatment of effluent gases from the manufacture of fertilizer and products obtained thereby

This invention relates to an improved process for the reduction of air and water pollution resulting from the manufacture of fertilizer.

In the manufacture of fertilizer, aqueous phosphoric acids or acid salts thereof are produced and reacted with ammonia to produce various nitrogen grades of fertilizer such as monoammonium or diammonium phosphate. In one common process, phosphate rock containing fluorapatite $[Ca_5F(PO_4)_3]$ is ground and reacted with aqueous sulfuric acid. After filtering to separate gypsum and other insoluble by-products, the crude aqueous phosphoric acid is concentrated by evaporation. Substantial quantities of fluoride gases are produced which are scrubbed from the effluent gases and substantial cooling is required. Large ponds are employed as repositories for insoluble by-products and as a source of recycle water for washing the filters and for scrubbing and cooling. Such ponds are costly to build and operate and are of increasing concern as a source of water and air pollution.

When aqueous phosphoric acid is reacted with ammonia, the resulting effluent gases contain substantial quantities of ammonia, fluoride, and other particulates. Conventionally, these gases have been washed with aqueous phosphoric acid to recover ammonia and a portion of the particulates, and thereafter scrubbed with pond water in a packed enclosure before exhausting to atmosphere. Washing with phosphoric acid releases fluoride gases such as HF and $SiF_4$ and copious quantities of pond water are subsequently required for cooling to more effectively remove the fluoride gases and submicron particulates.

It has been estimated that the cooling ponds employed cost per acre between US $20,000 and US $30,000 to build and between US $2000 and US $5000 per year to maintain. Expensive piping is also required and all overflows must be carefully neutralized. A typical integrated site will require a cooling pond area of one hundred acres or more, about one-half of which may be required to scrub the effluent gases from the ammonia-phosphoric acid reactor.

The phosphoric acid used to wash the gases has in general been restricted to aqueous concentrations between 20% and about 40% $P_2O_5$ by weight (West German Specification No. DE—A—2553028—UK Specification No. 1530477—refers to the use of 40% content of $P_2O_5$ in a phosphoric acid stream already ammonized in an ammonia-recovery operation). This concentration restriction is because at higher concentrations, increasing quantities of submicron fluoride particulates such as $NH_4F$, $NH_4F.HF$ and $(NH_4)_2SiF_6$ are produced which are very difficult to remove from the gases. About 85—99% of the ammonia in the effluent gases can thus be recovered. However, substantial water is present in the ammoniated acid when it is returned to the process for drying and conversion to product.

Since pond water typically is highly acidic, scrubbing with phosphoric acid is sometimes omitted and pond water is employed throughout.

As will be appreciated from the specific Example which follows, the present invention enables the effluent gases from an ammonium fertilizer reactor to be treated more effectively and more economically, without the need for cooling water with its attendant cooling pond. The invention also enables an improved rate of recovery of ammonia and a decrease in the water load on the dryer, and enables the separated wastes to be provided in a convenient solid form which can be used or readily disposed of as described hereinafter.

According to the invention, there is provided a process for treating ammonia-containing effluent gases from a nitrogen phosphate fertilizer reactor which process comprises washing the effluent gases with concentrated phosphoric acid containing between 45% and 55% by weight $P_2O_5$ to remove ammonia forming a product gas containing acid gases and particulates including $NH_4F$ and $NH_4F.HF$; contacting subsequently the product gas with finely divided alkaline target particles of solid sorbent material whilst maintaining the product gas at a dry bulb temperature of at least 20°F (11.1°C) above dew point: to capture contaminating particulates of the effluent and residual acid gases in the product gas; and separating the particulates and target particles from the product gas.

A number of suitable dry processes are known. For example, the use of target particles of nepheline syenite, phonolite, calcium hydroxide or the like is disclosed in U.S. Patents 3721066; 2773663; 3808774; 3854417; 3995005; and 3969482. As disclosed therein, the target particles which contact the gas may be used as a precoating on baghouse filters, may be introduced into the gas stream as a dry powder, or may be entrained in a secondary air or other gas stream. Most preferably, however, they are mixed in a secondary air or other gas stream and injected into the primary effluent gas stream with a relative velocity sufficient to capture the contaminating particulates by impact.

Where a portion of the contaminating particulates are smaller than 1 $\mu$m, the target particles may, for example, have an average size of between 3 and 50 $\mu$m.

To obtain distribution of the target particulates throughout the effluent gas while maintaining relative velocity, the secondary stream may conveniently be introduced into the interior of the effluent stream. Preferably the second gas stream is introduced into the effluent gas stream countercurrently thereto.

The target particulates are large enough so that after they combine with contaminating particulates, the resulting particle size and mass will be such as to permit efficient capture and separation by conventional gas cleaning equipment.

Apparatus for treating an effluent gas stream in this manner may conveniently comprise a first conduit for carrying the effluent gas stream along a first flow path, and a second conduit communicating with the first conduit. Means are provided for producing a secondary gas stream in the second conduit and for injecting target particulates into the secondary gas stream at a location sufficiently removed from the outlet end of the second conduit to permit the target particulates to become dispersed by and suspended in the secondary gas stream before introduction into the effluent gas stream. The exit end of the second conduit communicates with the interior of the first conduit. Distributor means located within the first conduit is preferred. The distributor means is preferably arranged to introduce the secondary gas stream countercurrently into the effluent gas stream. It is further preferred to employ means for accelerating the effluent gas stream during introduction of the secondary gas stream, which accelerating means may comprise deflector means directing the effluent stream toward or away from the first conduit walls.

The target particles preferably have an average particle size between 3 and 50 $\mu$m, more preferably 10—20 $\mu$m. Nepheline syenite is most preferred. The target particles and contaminating particulates may be separated from the gas in any convenient way, for example by baghouse filters (as mentioned above) or a cyclone separator.

The following is a specific description intended to illustrate the invention, reference being made to the accompanying drawings in which:—

Figure 1 is a schematic illustration of a preferred embodiment of the invention;

Figure 2 is a side view, partially broken away and on an enlarged scale, of preferred apparatus in which to mix washed effluent stream and secondary particulate-laden air stream (chamber 28 of Figure 1).

Figure 3 is an end view of the apparatus shown in Figure 2 (in addition showing certain features of conduit 26 of Figure 1); and

Figure 4 is a partially exploded view of the distributor shown generally at 100 in Figures 2 and 3.

Referring to the drawing, aqueous phosphoric acid (shown as $P_2O_5$) is reacted with ammonia in NP reactor 10 to obtain ammonium phosphate salts and the NP product recovered for further processing, for example drying and granulating. The effluent gases S1 from the reactor 10 containing ammonia, fluorides and solid particulates are passed into the venturi contactor 12. Contactor 12 comprises an inner chamber 14 open at each end with a venturi 16 in its upper portion, and an outer concentric chamber 18 having a gas outlet 24 and fluid outlet 25. Concentrated phosphoric acid ($P_2O_5$) is sprayed into the gas S1 as it enters the venturi 16. The acid reacts with and captures the majority of the ammonia entrained in effluent S1 and the resulting liquid is drained from the bottom of contactor 12 through outlet 25 with a portion recirculated to contactor 12 as shown at 20 and another portion or slipstream returned to reactor 10 as shown at 22. Typically, a major portion of the phosphoric acid product is recirculated to contactor 12. The contact of the ammonia-laden gases with the concentrated phosphoric acid results not only in the absorption of ammonia but also the formation of ammonium fluoride, ammonium bifluoride particulates and some HF and $SiF_4$.

Effluent gas S1 is passed downwardly through vertical chamber 14, outwardly through its open lower end into annular chamber 18 where it passes upwardly to the gas outlet 24, and exits as washed gas S2 into a conduit 26. In chamber 28, the gas S2 is mixed with a secondary air stream 30 into which target particles of sorbent material have been dispersed. The secondary stream 30 is preferably injected from a plurality of radial positions into the mixing chamber 28, which may comprise a portion of the duct 26, with a relative velocity sufficient for the target particles to capture by impact the contaminating particulates in stream S2. The combined gas stream S3 then passes to separating apparatus 32 which may comprise a cyclone or other apparatus of known construction, but which is preferably a baghouse.

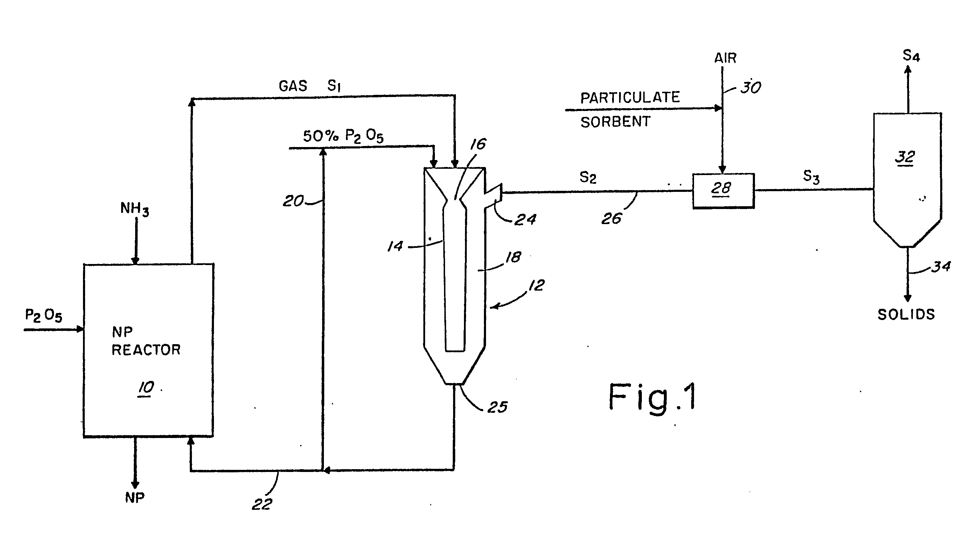

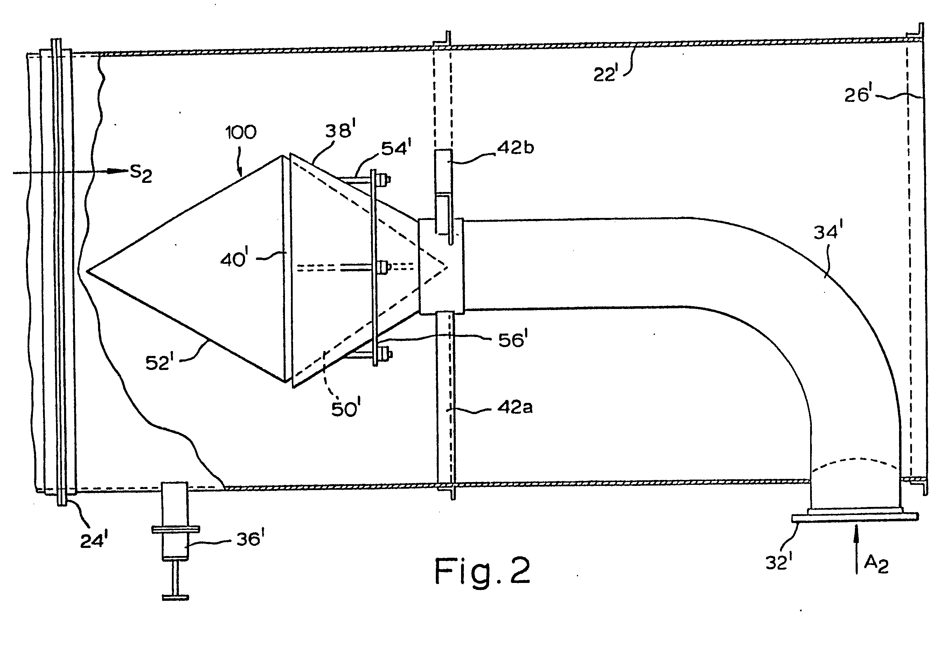

In the preferred mixing shown in Figures 2—4 a curved upper section 34' of a supply conduit 30 for secondary airstream and particulate extends through the wall of section 22' of conduit 26 of Figure 1 and has a flange 32' for joining curved upper section 34' to the remainder of conduit 30. The inner extremity of curved upper section 34' is fixed by supports 42a, 42b and 42c and is joined to a first right truncated cone 38' forming part of distributor 100 and made of sheet material, the truncated cone 38' having its larger base directed upstream with respect to the flow path of gas $S_2$. Located concentrically within and spaced from cone 38' is a second right cone 50' having its apex directed downstream with respect to the flow of $S_2$ and upstream with respect to the flow of gas $A_2$. Cones 38' and 50' define therebetween an annular passageway for the secondary gas stream $A_2$ which terminates in an annular orifice 40' through which the stream $A_2$ is introduced and injected countercurrently into effluent gas $S_2$. Together they constitute

distributor means for introducing and injecting stream A₂ into stream S₂ at a plurality of positions about the axis of duct 12'.

A third right cone 52' is provided with its base joined to the base of cone 50' and with its apex directed upstream with respect to the flow of gas S₂. Cone 52' serves both as accelerating means for the acceleration of gas stream S₂ during introduction of stream A₂, and as deflector means for deflecting the flow of S₂ toward the walls of conduit 26 of Figure 1 transversely across the orifice 40'.

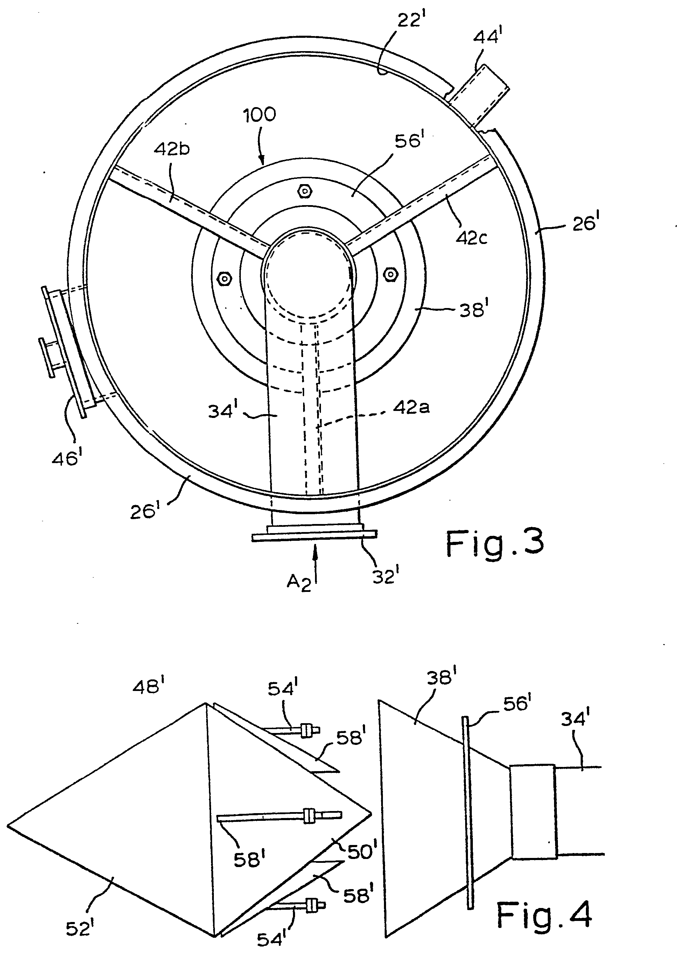

Cone 50' is secured to cone 38' by means of bolts 54' and is spaced therefrom by means of four spacer members 58'. As shown in Figure 3, a hinged door 46' is provided upstream of flange 24' for providing access to the interior of conduit 26. Also shown is a pipe stub 44' for connection to a fume hood (not shown) over a particulates supply hopper (not shown) to prevent escape of target particulate to the atmosphere.

By means of the apparatus shown in Figures 2—4, the gas stream A₂ and dispersed target particulates are introduced into the interior of stream S₁, with good distribution and high relative velocity. Relative velocity as used herein refers to the algebraic sum of the vectors of the flow of gas stream S₂ and A₂ parallel to the axis of duct 26 during introduction of A₂ into S₂. A relative velocity of 20—200 feet per second (6.096—60.96 m/sec.) is preferred and from 50—150 (15.24—45.72 m/sec.) is more preferred. By the means shown, an efficiency of capture of submicron particulates equivalent to a liquid venturi having an inlet to throat pressure drop of from 50 to 150 inches (1.27—3.81 metres) water gauge can be obtained with substantially reduced power, without contaminated wash liquid, and with reduced corrosion.

While circular sections for conduits and cones are preferred as shown, other polygonal or oval sections can be used. Preferably, the same sections are used on all concentric parts to maintain uniformity of flow about the longitudinal axis of conduit section 22'.

From Figures 2—4, it will be noted that while the flow is countercurrent, there are also radial components of flow as the streams S₂ and A₂ merge. As used herein, the term countercurrent includes such flow where there is a substantial vector component of motion against the direction of flow of the primary effluent stream S₂ parallel to the axis of conduit 26.

Countercurrent injection of the dispersed target particles distributed interiorly of the walls of the conduit is preferred.

The cleaned gas stream S4 is not saturated with moisture and is exhausted from the separator 32 with essentially no visible appearance. Except for the scrubbing materials, no heat is added to or removed from the gas. The solids separated within separator 32 are removed as a free flowing powder at 34. They include the target particulates, preferably nepheline syenite, and recovered contaminating particulates and acid gases, principally as ammonium fluoride [NH₄F], ammonium bifluoride [NH₄F . HF], and ammonium fluosilicate [(NH₄)₂SiF₆]. The solids collected may be mixed with the fertilizer product for sale or the ammonium fluoride salts may be dissolved in a concentrated form and a portion of the insoluble nepheline syenite separate and recycled. The ammonium fluoride salts may also be sold as a fluxing agent in the manufacture of nonferrous metals or may be added to impure phosphoric acid as a clarifying agent.

The combined gas stream S3 (ie. stream 52×stream 30) contains sufficient moisture for activation of nepheline syenite or other target particulate material as disclosed in the above-referenced patents but is sufficiently low in relative humidity to avoid plugging separator 32. Typically the gas stream has a dry bulb temperature above 125°F (51.6°C) and from 40°F (about 22°C) to 80°F (about 44°C) higher than its dew point temperature. A temperature difference of at least 20°F (11.1°C) should be maintained.

If desired, the gaseous effluent from apparatus (such as a drier or granulator) provided to treat the fertilizer product of the NP reactor 10 can be similarly treated together with or separately from the effluent gases from the NP reactor.

The following Example is intended further to illustrate the invention.

Example
60,000 ACFM (actual cubic feet per minute≡1699.01 m³/min) of effluent gas S1 having a dry bulb/dew point temperature of 155/150°F (68.3/65.5°C) and containing 2 pounds per hour fluoride, 1,000 pounds (453.59 kg) per hour of NH₃, and 500 pounds (226.79 kg) per hour of contaminating particulates was passed into venturi 16 of contactor 12. 900 US gallons (3.407 m³) per minute of phosphoric acid at 50 wt.% P₂O₅ were recirculated through chamber 14 of contactor 12, and a slipstream of the recirculating liquid was returned via conduit 22 to reactor 10. 55,000 ACFM (actual cubic feet per minute≡1557.5 m³/min) of scrubbed gas S2 were recovered from contactor 12 having a dry bulb/wet bulb temperature of 184/127°F (84.4°C/52.7°C) and having a fluoride content of 2 pounds (0.9072 kg) per hour, NH₃ content of 10 pounds (4,536 kg) per hour and a contaminating particulate content of 700 pounds (317.51 kg) per hour. A secondary air stream of 3,000 ACFM (84.95 m³/min) at 90°F (32.2°C) (dry bulb), having 60 pounds (27.216 kg) per hour of nepheline syenite with an average particle size between 10 and 20 μm dispersed therein, was injected into the stream S2 within chamber 28. The mixed gas stream S3 exited from chamber 28 at 58,000 ATFM (1642.37 m³/min) and with a temperature dry bulb/wet bulb, of 178/125°F (81.1/51.6°C) and was passed through a baghouse 32. Effluent gas stream S4 was discharged at the rate of 58,000 ACFM (1642.37 m³/min) at a dry bulb/wet bulb temperature of 178/125°F (81.1°C to 51.6°C) and with an ammonia gas content of 3 pounds (1.361 kg) per hour, fluoride gas content of 0.5 pounds (0.2268 kg) per hour and a particulate material content of about 14 pounds (6.35 kg) per hour. About 99 wt % of the $NH_3$ in the effluent gas was recovered as product.

A comparison between the prior art process and the present process is given in the Table below for a plant having a production rate of dried NP product of about 140 US tons (127006 kg) per hour.

### TABLE

|  | Prior art | Present invention |
|---|---|---|
|  | 35 wt/% $P_2O_5$ | 50 wt/% $P_2O_5$ |
| Pond Water GPM (m³/min) | 3000 (11.356) | 0 — |
| Ammonium Gas Effluent lb/hr (kg/hr) | 35 (15.876) | 3 (1.3608) |
| Fluoride Gas Effluent lb/hr (kg/hr) | 4 (1.8144) | 0.5 (0.2268) |
| Fluoride to Pond lb/hr (kg/hr) | 20 (9.0718) | 0 — |
| Ammonia to Pond lb/hr (kg/hr) | 100 (45.359) | 0 — |
| Particular Effluent lb/hr (kg/hr) | 25 (11.3398) | 14 (6.3503) |

Any suitable liquid contacting apparatus 12 may be used. A concentric venturi of known construction as illustrated in the drawing is preferred.

Concentrated phosphoric acid of 45—55% $P_2O_5$ content by weight is used in the process herein disclosed. Improved ammonia recovery is obtained, less drying is required to recover product therefrom, and subsequent heating of the gases is usually unnecessary.

As illustrated and described above, the present invention is more economic than presently used technology, minimizes secondary pollution, conserves land, and can produce separated solids as a saleable product.

### Claims

1. A process for treating ammonia-containing effluent gases from a nitrogen phosphate fertilizer reactor which process comprises washing the effluent gases with concentrated phosphoric acid containing between 45% and 55% by weight $P_2O_5$ to remove ammonia forming a product gas containing acid gases and particulates including $NH_4F$, and $NH_4F . HF$; contacting subsequently the product gas with finely divided alkaline target particles of solid sorbent material whilst maintaining the product gas at a dry bulb temperature of at least 20°F (11.1°C) above dew point, to capture contaminating particulates of the effluent gases and residual acid gases in the product gas; and separating the particulates and target particles from the product gas.

2. A process as claimed in Claim 1 wherein said phosphoric acid washing liquid contacts the gaseous effluent in a venturi.

3. A process as claimed in Claim 2 wherein said venturi is formed within an inner chamber within which the gaseous effluent flows downwardly, said inner chamber being disposed concentrically within an outer chamber so that effluent flowing downwardly in said inner chamber exits a lower portion thereof after passage through said venturi and flows upwardly in said outer chamber to an exit therefrom, washing liquid exiting from a lower portion of said inner chamber for recovery.

4. A process as claimed in any one of Claims 1 to 3 wherein said sorbent material comprises nepheline syenite, phonolite, calcium hydroxide, lime, limestone or a mixture of two or more thereof.

5. A process as claimed in any preceding claim wherein said solid target particulates are dispersed in a secondary gas stream and said secondary gas stream is introduced into a primary gas stream comprising said effluent gas with a relative velocity therewith sufficient for the contaminating particulates to impact with and be captured by the target particles.

6. A process as claimed in Claim 5 wherein the combined primary and secondary gas streams have a dry bulb temperature at least 20°F (11.1°C) higher than their dew point temperature.

7. A process of Claim 5 or Claim 6 wherein a portion of said contaminating particulates are smaller than one micron and said target particulates have an average size between 3 and 50 $\mu$m.

8. A process as claimed in any preceding claim wherein the particulates are separate from the remaining gaseous effluent in a baghouse.

9. A process as claimed in Claim 8 wherein said target particles are provided as a coating on filter material within the baghouse.

10. A process as claimed in any one of Claims 1 to 7 wherein said target particles and said contaminating particulates are separated from the gas in a cyclone separator.

11. A process as claimed in any preceding claim in combination with a process comprising reaction to produce nitrogen phosphate fertilizer and said gaseous effluent.

12. Solid particulates whenever obtained from a process as claimed in any preceding claim.

13. Ammonium fluoride salt whenever obtained by a process as claimed in any one of Claims 1 to 11.

## Revendications

1. Procédé de traitement des gaz effluents contenant de l'ammoniac, issus d'un réacteur de fabrication d'engrais azote phosphate, procédé qui comprend le lavage des gaz effluents avec de l'acide phosphorique concentré contenant entre 45% et 55% en poids de $P_2O_5$ pour éliminer l'ammoniac en formant un gaz contenant des gaz et des particules acides incluant $NH_4F$ et $NH_4F$, $NH$; le contact ultérieur du produit gazeux avec des particules cible alcalines finement divisées d'une matière absorbante ou adsorbante solide tout en maintenant le gaz produit à une température de bulbe sec d'au moins 20°F (11,1°C) au dessus du point de rosée pour fixer les particules contaminantes des gaz effents et des gaz acides résiduels dans le gaz produit, et la séparation des particules et des particules cible à partir des gaz produits.

2. Procédé selon la revendication 1 dans lequel le liquide de lavage à base d'acide phosphorique est mis en contact avec l'effluent gazeux dans un venturi.

3. Procédé selon la revendication 2 dans lequel ledit venturi est constitué d'une chambre intérieure dans laquelle l'effluent gazeux circule de haut en bas, cette chambre intérieure étant disposée de façon concentrique à l'intérieur d'une chambre extérieure de façon telle que l'effluent circulant de haut en bas dans la chambre intérieure sorte par une partie inférieure de celle-ci acrès être passé a travers le venturi et circule de bas en haut dans la chambre extérieure jusqu'à une sortie, le liquide de lavage sortant par une partie inférieure de la chambre intérieure pour être récupéré.

4. Procédé selon l'une quelconque des revendications 1 à 3 dans lequel la matière absorbante ou adsorbante comprend la néphéline syénite, la phonolite, l'hydroxyde de calcium, la chaux, le calcaire ou un mélange de deux ou plus de ceux-ci.

5. Procédé selon l'une quelconque des revendications précédentes dans lequel les particules cible solides sont dispersées dans un courant gazeux secondaire et ce courant gazeux secondaire est introduit dans le courant gazeux primaire comprenant le gaz effluent avec une vitesse relative suffisante pour que les particules contaminantes heurtent les particules cible et soient fixées par elles.

6. Procédé selon la revendication 5 dans lequel les courants gazeux primaire et secondaire réunis ont une température de bulbe sec d'au moins 20°F (11,1°C) supérieure à leur point de rosée.

7. Procédé selon l'une des revendications 5 ou 6 dans lequel une portion des particules contaminantes sont inférieures à un micron et les particules cible ont une dimension moyenne comprise entre 3 et 50 $\mu$m.

8. Procédé selon l'une quelconque des revendications précédentes dans lequel les particules sont séparées de l'effluent gazeux restent dans un sac filtrant.

9. Procédé selon la revendication 8 dans lequel les particules cible sont fournies sous forme d'une revétement sur une matière filtrante à l'intérieur du sac filtrant.

10. Procédé selon l'une quelconque des revendications 1 à 7 dans lequel les particules cible et les particules contaminantes sont séparées du gaz dans un séparateur cyclone.

11. Procédé selon l'une quelconque des revendications précédentes en combinaison avec un procédé comprenant une réaction pour produire de l'engrais azote phosphate et ledit effluent gazeux.

12. Particules solides obtenues lorsqu'on met en jeu un procédé tel que revendiqué dans l'une quelconque des revendications précédentes.

13. Flurorure d'ammonium obtenu lorsqu'on met en jeu un procédé tel que revendiqué dans l'une quelconque des revendications précédentes.

## Patentansprüche

1. Verfahren zur Aufbereitung von Ammoniak enthaltenden Abgasen aus einem Stickstoff-Phosphat-Düngemittelreaktor, das folgende Schritte umfaßt: Waschen der Abgase mit konzentrierter Phosphorsäure mit einem Gehalt an 45 bis 55 Gew.-% $P_2O_5$, um Ammoniak zu entfernen, wobei ein Produktgas gebildet wird, das saure Gase und feste Teilchen einschließlich $NH_4F$ und $NH_4F \cdot HF$ enthält; anschließendes Inberührungbringen des Produktgases mit fein verteilten alkalischen Auffangteilchen aus einem festen Sorbens-Material, während das Produktgas bei einer Trockenthermometertemperatur von mindestens 11,1°C (20°F) oberhalb des Taupunkts gehalten wird, um als Verunreinigungen vorhandene feste Teilchen der Abgase und restliche saure Gase des Produktgases einzufangen; und Abtrennen der festen Teilchen und der Auffangteilchen aus dem Produktgas.

2. Verfahren nach Anspruch 1, bei dem die Phosphorsäure-Waschflüssigkeit mit dem Abgas in einem Venturi in Berührung kommt.

3. Verfahren nach Anspruch 2, bei dem der Venturi innerhalb einer inneren Kammer ausgebildet ist, in der das Abgas nach unter fließt, wobei die innere Kammer konzentrisch innerhalb einer äußeren Kammer angeordnet ist, so daß das in der inneren Kammer nach unten fließende Abgas nach dem Durchgang durch den Venturi in ihren unteren Teil eintritt und in der äußeren Kammer nach oben zu deren Austritt fließt, wobei Waschflüssigkeit aus dem unteren Bereich der inneren Kammer zur Rückgewinnung austritt.

4. Verfahren nach einem der Ansprüche 1 bis 3, bei dem das Sorbens-Material aus Nephelin-Syenit, Phonolit, Calciumhydroxid, Kalk, Kalkstein oder einem Gemisch aus zwei oder mehr dieser Materialien besteht.

5. Verfahren nach einem der vorhergehenden Ansprüche, bei dem die festen Auffangteilchen in einem sekundären Gasstrom dispergiert sind und der sekundäre Gasstrom in den primären Gasstrom, der das Abgas enthält, mit einer solchen diesem gegenüber relativen Geschwindigkeit eingeleitet wird, die ausreicht, daß die als Verunreinigungen vorhandenen festen Teilchen mit den Auffangteilchen kollidieren und durch diese eingefangen werden.

6. Verfahren nach Anspruch 5, bei dem die kombinierten primären und sekundären Gasströme eine Trockenthermometertemperatur haben, die mindestens 11,1°C (20°F) höher als ihre Taupunkttemperatur ist.

7. Verfahren nach Anspruch 5 oder 6, bei dem ein Teil der als Verunreinigungen vorhandenen festen Teilchen kleiner als 1 $\mu$m ist und die Auffangteilchen eine durchschnittliche Größe zwischen 3 und 50 $\mu$m besitzen.

8. Verfahren nach einem der vorhergehenden Ansprüche, bei dem die festen Teilchen von dem verbleibenden gasförmigen Abstrom in einem Sackfilter-Gefäß abgetrennt werden.

9. Verfahren nach Anspruch 8, dadurch gekennzeichnet, daß die Auffangteilchen als Beschichtung des Filtermaterials in dem Sackfilter-Gefäß vorgesehen sind.

10. Verfahren nach einem der Ansprüche 1 bis 7, bei dem die Auffangteilchen und die als Verunreinigungen vorhandenen festen Teilchen in einem Zyklonabscheider von dem Gas abgetrennt werden.

11. Verfahren nach einem der vorhergehenden Ansprüche in Kombination mit einem Verfahren, das die Reaktion zur Herstellung von Stickstoff-Phosphat-Düngemittel und des Abgases umfaßt.

12. Feste Teilchen, erhalten durch ein Verfahren nach einem der vorhergehenden Ansprüche.

13. Ammoniumfluorid, erhalten durch ein Verfahren nach einem der Ansprüche 1 bis 11.

Fig.1

Fig. 2

0 016 591

Fig.3

Fig.4